# EUROPÄISCHE PATENTANMELDUNG

(11) **EP 4 039 953 A1**
(43) Veröffentlichungstag der Anmeldung: **10.08.2022**
(21) Anmeldenummer: 21156055.2
(22) Anmeldetag: 09.02.2021
(51) Int. Cl.: F01N 13/10, F02B 37/007, F01D 9/02

(54) **GASAUSTRITTSGEHÄUSE, ANORDNUNG VON GASAUSTRITTSGEHÄUSEN, ABGASTURBOLADER MIT EINEM GASAUSTRITTSGEHÄUSE UND VERWENDUNG EINES GASAUSTRITTSGEHÄUSES**

(71) Anmelder: ABB Switzerland Ltd., 5400 Baden (CH)
(72) Erfinder: ALBIEZ, Bernd, 79736 Rickenbach (DE); RECHIN, Thomas, 5400 Baden (CH); DICKMANN, Hans-Peter, 79761 Waldshut (DE); HAEGE, Christoph, 79618 Rheinfelden (DE); PHILLIPSEN, Bent, 5406 Baden-Rütihof (CH)
(74) Vertreter: Zimmermann & Partner Patentanwälte mbB

(57) **Zusammenfassung**

Es wird ein Gasaustrittsgehäuse (100, 400) für einen Abgasturbolader (102) beschrieben. Das Gasaustrittsgehäuse (100, 400) umfasst einen Diffusor-Gehäuseabschnitt (110) zur Verzögerung eines aus einer Turbine (103) des Abgasturboladers (102) in einer Einströmrichtung (151) in den Diffusor-Gehäuseabschnitt (110) einströmenden ersten Abgasstroms. Der Diffusor-Gehäuseabschnitt (110) weitet sich in Strömungsrichtung auf. Das Gasaustrittsgehäuse (100, 400) umfasst weiterhin einen stromabwärts unmittelbar auf den Diffusor-Gehäuseabschnitt (110) folgenden Vereinigungs-Gehäuseabschnitt (120) zum Empfangen des verzögerten ersten Abgasstroms aus dem Diffusor-Gehäuseabschnitt (110) und zum Vereinigen des verzögerten ersten Abgasstroms mit einem zweiten Abgasstrom (152). Der Vereinigungs-Gehäuseabschnitt (120) erstreckt sich in einer im Wesentlichen quer zur Einströmrichtung verlaufenden zweiten Richtung und hat zwei in der zweiten Richtung gegenüberliegende Öffnungen (130, 132). Eine erste (130) der zwei gegenüberliegenden Öffnungen ist zum Aufnehmen des zweiten Abgasstroms (152) eingerichtet, und eine zweite (132) der zwei gegenüberliegenden Öffnungen ist zum Ausleiten des mit dem verzögerten ersten Abgasstrom vereinigten zweiten Abgasstroms (152) eingerichtet.

## Beschreibung

### Technisches Gebiet

Die Erfindung liegt auf dem Gebiet der Abgasturbolader für aufgeladene Brennkraftmaschinen und betrifft insbesondere ein Gasaustrittsgehäuse für einen Abgasturbolader, wobei das Gasaustrittsgehäuse einen Diffusor-Gehäuseabschnitt sowie einen Vereinigungs-Gehäuseabschnitt beinhaltet. Des Weiteren betrifft die Erfindung eine Anordnung mit einem ersten Gasaustrittsgehäuse und einem zweiten Gasaustrittsgehäuse, einen Abgasturbolader mit einem Gasaustrittsgehäuse, sowie die Verwendung eines Gasaustrittsgehäuses in einem Abgassystem von Verbrennungsmotoren.

### Technischer Hintergrund

In Abgasturboladern wird der Abgasstrom eines Verbrennungsmotors zum Antrieb einer abgasseitigen Turbine verwendet. Die so erzeugte Arbeit wird zum Antrieb eines eingangsseitig am Verbrennungsmotors liegenden Verdichters genutzt, der die Ansaugluft des Motors verdichtet. Durch die so ermöglichte Aufladung des Verbrennungsmotors können die Leistung und der Wirkungsgrad des Verbrennungsmotors gesteigert werden.

Nach dem Durchströmen der abgasseitigen Turbine gelangt der Abgasstrom in ein Gasaustrittsgehäuse des Turboladers und wird dort abgeleitet. Hierin wird der Abgasstrom zum Erreichen eines möglichst hohen Turbinenwirkungsgrads vorteilhafterweise in einen Diffusor eingeführt, wo der Abgasstrom verzögert wird und sich dabei der Gasdruck des Abgasstroms erhöht. Aus der WO2019076980A1 ist bekannt, dass durch die Verwendung eines geeigneten Diffusors das Auftreten von Ablösungen oder Wirbeln vermieden werden kann.

Wenn mehrere Abgasströme aus mehreren Abgasturboladern vorliegen, können diese etwa in eine gemeinsame Abgasleitung, wie z.B. einen gemeinsamen Schornstein, geleitet werden. Insbesondere für eine Anordnung, in der eine ungerade Anzahl an Abgasströmen vereinigt werden soll, ist jedoch bislang keine Vorrichtung bekannt, die die Abgasströme auf strömungstechnisch günstige Weise verzögert und vereinigt und gleichzeitig platzsparend und mit einer möglichst geringen Anzahl von verschiedenen Bauteilen realisierbar ist.

Vor diesem Hintergrund werden daher Vorrichtungen und eine Verwendung gemäß den unabhängigen Ansprüchen der vorliegenden Patenanmeldung vorgeschlagen. Weitere günstige Ausführungsformen ergeben sich aus den abhängigen Ansprüchen und der Beschreibung.

### Kurze Darstellung der Erfindung

Gemäß einem Aspekt der Erfindung wird ein Gasaustrittsgehäuse für einen Abgasturbolader beschrieben. Das Gasaustrittsgehäuse umfasst einen Diffusor-Gehäuseabschnitt zur Anordnung unmittelbar stromabwärts einer Turbine des Abgasturboladers zur Verzögerung eines aus der Turbine des Abgasturboladers in einer Einströmrichtung unmittelbar in den Diffusor-Gehäuseabschnitt einströmenden ersten Abgasstroms. Der Diffusor-Gehäuseabschnitt weitet sich in Strömungsrichtung auf. Der Diffusor-Gehäuseabschnitt ragt zumindest teilweise in den Vereinigungs-Gehäuseabschnitt hinein. Das Gasaustrittsgehäuse umfasst weiterhin einen stromabwärts unmittelbar auf den Diffusor-Gehäuseabschnitt folgenden Vereinigungs-Gehäuseabschnitt zum Empfangen des verzögerten ersten Abgasstroms aus dem Diffusor-Gehäuseabschnitt und zum Vereinigen des verzögerten ersten Abgasstroms mit einem zweiten Abgasstrom. Der Vereinigungs-Gehäuseabschnitt erstreckt sich in einer im Wesentlichen quer zur Einströmrichtung verlaufenden zweiten Richtung und hat zwei in der zweiten Richtung gegenüberliegende Öffnungen. Eine erste der zwei gegenüberliegenden Öffnungen ist zum Aufnehmen des zweiten Abgasstroms eingerichtet, und eine zweite der zwei gegenüberliegenden Öffnungen ist zum Ausleiten des mit dem verzögerten ersten Abgasstrom vereinigten zweiten Abgasstroms eingerichtet.

Gemäß einem Aspekt der Erfindung werden ein erstes Gasaustrittsgehäuse und ein zweites Gasaustrittsgehäuse beschrieben. Das zweite Gasaustrittsgehäuse ist ein Gasaustrittsgehäuse nach einer hierin beschriebenen Ausführungsform. Aus einer Öffnung des ersten Gasaustrittsgehäuses wird ein Abgasstrom ausgeleitet. Die Öffnung des ersten Gasaustrittsgehäuses ist fluidisch mit der Öffnung zum Aufnehmen des zweiten Abgasstroms des zweiten Gasaustrittsgehäuses verbunden, sodass der aus dem ersten Gasaustrittsgehäuse ausgeleitete Abgasstrom als zweiter Abgasstrom in das zweite Gasaustrittsgehäuse eingeleitet wird. Das zweite Gasaustrittsgehäuse ist dazu eingerichtet, den aus dem ersten Gasaustrittsgehäuse stammenden zweiten Abgasstrom mit einem in das zweite Gasaustrittsgehäuse einströmenden ersten Abgasstrom zu vereinigen.

Gemäß einem Aspekt der Erfindung wird ein Abgasturbolader für einen Verbrennungsmotor beschrieben. Der Abgasturbolader umfassend ein Gasaustrittsgehäuse gemäß einer hierin beschriebenen Ausführungsform. Der Abgasturbolader ist mit dem Gasaustrittsgehäuse zum Einleiten des ersten Abgasstroms in den Diffusor-Gehäuseabschnitt des Gasaustrittsgehäuses fluidisch verbunden. Der erste Abgasstrom ist ein aus der Turbine des Abgasturboladers stammender Abgasstrom.

Gemäß einem Aspekt betrifft die Erfindung die Verwendung eines Gasaustrittsgehäuses nach einer hierin beschriebenen Ausführungsform in einem Abgassystem eines oder mehrerer Verbrennungsmotoren mit Abgasturboladern. Die Verwendung umfasst das Einleiten eines aus der Turbine des Abgasturboladers austretenden ersten Abgasstroms in einer Einströmrichtung in den Diffusor-Gehäuseabschnitt des Gasaustrittsgehäuses. Der Diffusor-Gehäuseabschnitt des Gasaustrittsgehäuses verzögert den ersten Abgasstrom entlang der Strömungsrichtung. Die Verwendung umfasst weiterhin das Einleiten eines zweiten Abgasstroms in eine der Öffnungen des Vereinigungs-Gehäuseabschnitts des Gasaustrittsgehäuses, sowie das Einleiten des durch den Diffusor-Gehäuseabschnitt verzögerten ersten Abgasstroms in den Vereinigungs-Gehäuseabschnitt des Gasaustrittsgehäuses. Der Vereinigungs-Gehäuseabschnitt und/oder der Diffusor-Gehäuseabschnitt des Gasaustrittsgehäuses lenkt den ersten Abgasstrom entlang der zweiten Richtung um. Der Vereinigungs-Gehäuseabschnitt folgt unmittelbar auf den Diffusor-Gehäuseabschnitt.

Der Vorteil eines Gasaustrittsgehäuses, einer Anordnung mit einem ersten Gasaustrittsgehäuse und einem zweiten Gasaustrittsgehäuse, einen Abgasturbolader mit einem Gasaustrittsgehäuse, sowie die Verwendung eines Gasaustrittsgehäuses in einem Abgassystem von Verbrennungsmotoren gemäß einer der hierin beschriebenen Ausführungsformen liegt darin, dass ein erster aus einem Abgasturbolader stammender Abgasstrom mit einem zweiten Abgasstrom auf vorteilhafte Weise vereinigt werden kann. Insbesondere kann die Vereinigung so erfolgen, dass eine günstige Strömung des vereinigten Abgasstroms erreicht wird. Vorteilhafterweise wird der erste Abgasstrom vor der Vereinigung in einem Diffusor-Gehäuseabschnitt des Gasaustrittsgehäuses verzögert, sodass gemäß der vorliegenden Erfindung hierfür auf ein getrenntes Bauteil verzichtet werden kann. Dadurch kann eine platzsparende Ausführung des Abgassystems ermöglicht werden.

Das erfindungsgemäße Gasaustrittsgehäuse ist zum Abgasturbolader gehörig und unterscheidet sich darin z.B. von einer weiter stromabwärts angeordneten gemeinsamen Abgasleitung (z.B. einen gemeinsamen Schornstein) zum Sammeln der Abgasströme aus mehreren Abgasturboladern. Eine solche gemeinsame Abgasleitung stellt kein erfindungsgemäßes Gasaustrittsgehäuse dar, da sie nicht zum Abgasturbolader gehört und außerdem keinen stromabwärts unmittelbar auf einen Diffusor-Gehäuseabschnitt folgenden Vereinigungs-Gehäuseabschnitt aufweist.

### Kurzbeschreibung der Figuren

Im Weiteren soll die Erfindung anhand von in Figuren dargestellten Ausführungsbeispielen erläutert werden, aus denen sich weitere Vorteile und Abwandlungen ergeben. Dazu zeigen:
Figur 1 eine schematische Schnittansicht entlang der Einströmrichtung und der zweiten Richtung durch ein Gasaustrittsgehäuse gemäß einer hierin beschriebenen Ausführungsform
Figur 2 eine schematische Schnittansicht entlang der Einströmrichtung und der zweiten Richtung durch ein Gasaustrittsgehäuse gemäß einer hierin beschriebenen Ausführungsform
Figur 3 eine schematische Draufsicht von Seiten der Einström-Öffnung auf ein Gasaustrittsgehäuse gemäß einer hierin beschriebenen Ausführungsform
Figur 4 eine schematische Schnittansicht entlang der Einströmrichtung und der zweiten Richtung durch ein Gasaustrittsgehäuse gemäß einer hierin beschriebenen Ausführungsform
Figur 5 eine schematische Schnittansicht entlang der Einströmrichtung und der zweiten Richtung durch ein Gasaustrittsgehäuse gemäß einer hierin beschriebenen Ausführungsform
Figur 6 eine schematische Draufsicht von Seiten der Einström-Öffnung auf ein Gasaustrittsgehäuse gemäß einer hierin beschriebenen Ausführungsform
Figur 7 eine schematische Schnittansicht entlang der Einströmrichtung und der zweiten Richtung durch eine Anordnung von Gasaustrittsgehäusen gemäß einer hierin beschriebenen Ausführungsform
Figur 8 eine schematische Ansicht einer Anordnung von Gasaustrittsgehäusen gemäß einer hierin beschriebenen Ausführungsform
Figur 9 eine schematische Schnittansicht entlang der Einströmrichtung durch einen Diffusor-Gehäuseabschnitt eines Gasaustrittsgehäuses gemäß einer hierin beschriebenen Ausführungsform

Im Allgemeinen werden gleiche Merkmale in den Figuren mit der gleichen Referenznummer bezeichnet. Im Allgemeinen sind gleiche oder gleichartige Merkmale einer Ausführungsform mit einer weiteren hierin beschriebenen Ausführungsform kombinierbar. Im Allgemeinen wird, sofern nicht anders erwähnt, bei der Beschreibung von unterschiedlichen Ausführungsformen nur explizit auf neue Merkmale oder Unterschiede zwischen den jeweiligen Ausführungsformen eingegangen.

### Detaillierte Beschreibung der Figuren

Im Folgenden wird die Erfindung im Zusammenhang mit den Figuren anhand von Ausführungsformen beschrieben. Da die Erfindung ein Gasaustrittsgehäuse zum Führen von Abgasströmen betrifft, erfolgt die Beschreibung im Sinne einer deutlichen und prägnanten Offenbarung teilweise unter Beschreibung des Verhaltens der zu führenden Abgasströme. Die jeweils beschriebene Ausführungsform soll hierbei so verstanden werden, dass sie dazu geeignet ist, den jeweiligen Abgasstrom in der beschriebenen Weise zu führen, auch wenn in der Beschreibung der Ausführungsform dazu an mancher Stelle direkt auf einen Abgasstrom Bezug genommen wird.

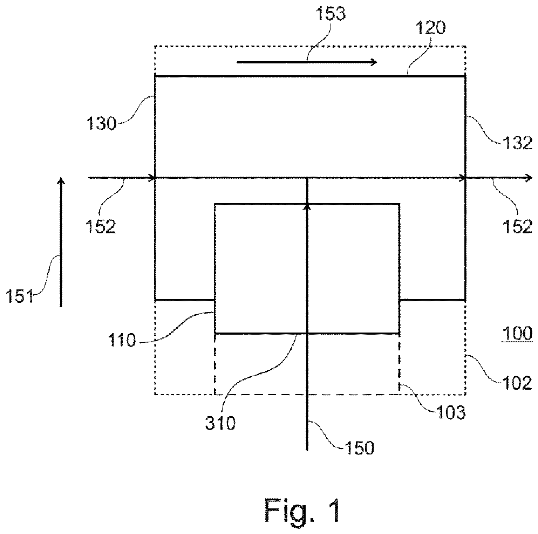

Figur 1 zeigt schematisch ein Gasaustrittsgehäuse 100 für einen Abgasturbolader 102 gemäß einer Ausführungsform. Der Abgasturbolader 102 kann mit dem Gasaustrittsgehäuse 100 fluidisch so verbunden sein, dass der gesamte Abgasstrom des Abgasturboladers 102 in das Gasaustrittsgehäuse 100 einströmt. Das Gasaustrittsgehäuse 100 kann Teil eines Abgasturboladers 102 sein. Der Abgasturbolader 102 kann ein Axial-Abgasturbolader sein, bei dem die abgasseitige Turbine 103 vom ersten Abgasstrom axial durchströmt oder umströmt wird. Das Gasaustrittsgehäuse 100 ist ein zum Abgasturbolader zugehöriges Bauteil und kann einstückig mit von anderen Bauteilen des Abgasturboladers (etwa gemeinsam mit ihnen gegossen) oder getrennt von den anderen Bauteilen des Abgasturboladers vorgesehen sein. Das Gasaustrittsgehäuse 100 kann vom Abgasturbolader 102 oder von zum Abgasturbolader 102 gehörigen Gehäuseteilen ganz oder teilweise umschlossen sein. Das Gasaustrittsgehäuse 100 kann an den Turbolader 102 angrenzen. In Fig. 1 ist der Abgasturbolader 102 als ein das Gasaustrittsgehäuse 100 vollständig umspannendes Bauteil dargestellt. Das Gasaustrittsgehäuse kann auch selbst aus einem Stück oder aus mehreren Gehäuseteilen bestehen. Das Gasaustrittsgehäuse umfasst einen Diffusor-Gehäuseabschnitt 110 zur Verzögerung eines aus der Turbine 103 des Abgasturboladers 102 stammenden, ersten Abgasstroms 150. Der Diffusor-Gehäuseabschnitt 110 ist unmittelbar - also insbesondere ohne ein sich nicht erweiterndes Zwischenstück - stromabwärts der Turbine 103 des Abgasturboladers 102 angeordnet (hierbei kann ein Teil des Diffusor-Gehäuseabschnitts 110 sogar mit der Turbine 103 überlappen) und empfängt den ersten Abgasstrom 150 unmittelbar aus der Turbine 103 des Abgasturboladers 102. Der erste Abgasstrom 150 strömt über eine Einström-Öffnung 310 in den Diffusor-Gehäuseabschnitt 110 des Gasaustrittsgehäuses 100 ein. Der erste Abgasstrom 150 hat hierbei beim Einströmen eine Einströmrichtung 151. In der in Figur 1 gezeigten Ausführungsform behält der erste Abgasstrom 150 die Einströmrichtung 151 weitestgehend bei, sodass die Strömungsrichtung des ersten Abgasstroms 150 im Diffusor-Gehäuseabschnitt 110 der Einströmrichtung 151 im Wesentlichen entspricht. Geringfügige Richtungsänderungen, insbesondere bereichsweise Richtungsänderungen von Teilen des ersten Abgasstroms 150 innerhalb des Diffusor-Teilgehäuses 110 sind hierbei nicht zu berücksichtigen.

Gemäß der im Zusammenhang mit Figur 1 beschriebenen Ausführungsform weitet sich der Diffusor-Gehäuseabschnitt 110 in Strömungsrichtung auf. Insbesondere kann sich der Diffusor-Gehäuseabschnitt 110 in Strömungsrichtung des ersten Abgasstroms 150 kontinuierlich aufweiten. Ein solcher Diffusor-Gehäuseabschnitt kann als ein axialer Diffusor-Gehäuseabschnitt bzw. ein axialer Diffusor bezeichnet werden. Durch das sich Aufweiten des Diffusor-Gehäuseabschnitts 110 kann sich der dem ersten Abgasstrom 150 zur Verfügung stehende Strömungsquerschnitt erhöhen. Insbesondere kann sich der dem ersten Abgasstrom 150 zur Verfügung stehende Strömungsquerschnitt in Strömungsrichtung des ersten Abgasstroms 150 erhöhen. Unter sich aufweiten kann verstanden werden, dass das Diffusor-Teilgehäuse einen sich in Strömungsrichtung des axial fließenden ersten Abgasstroms erweiternden Querschnitt aufweist. Die Erhöhung des Strömungsquerschnitts in Strömungsrichtung kann zu einer Verzögerung des ersten Abgasstroms 150 führen. Die Erhöhung des Strömungsquerschnitts in Strömungsrichtung kann zu einer Steigerung des Drucks des ersten Abgasstroms 150 führen. Die Verzögerung des ersten Abgasstroms 150 kann im Diffusor-Gehäuseabschnitt 110 des Gasaustrittsgehäuses 100 erfolgen, sodass der erste Abgasstrom 150 beim Ausströmen aus dem Diffusor-Gehäuseabschnitt 110 verzögert und/oder mit gesteigertem Druck vorliegt. Ein erster Abgasstrom 150 kann beim Verlassen des Diffusor-Gehäuseabschnitts 110 ein verzögerter erster Abgasstrom sein.

Gemäß der im Zusammenhang mit Figur 1 beschriebenen Ausführungsform folgt auf den Diffusor-Gehäuseabschnitt 110 in Strömungsrichtung unmittelbar ein Vereinigungs-Gehäuseabschnitt 120. Der Vereinigungs-Gehäuseabschnitt 120 empfängt den verzögerten ersten Abgasstrom aus dem Diffusor-Gehäuseabschnitt 110. Im Vereinigungs-Gehäuseabschnitt 120 wird der verzögerte erste Abgasstrom mit einem zweiten Abgasstrom 152 vereinigt.

Gemäß der im Zusammenhang mit Figur 1 beschriebenen Ausführungsform erstreckt sich der Vereinigungs-Gehäuseabschnitt 120 in eine zweite Richtung 153. Im Zusammenhang mit der vorliegenden Offenbarung ist als "sich erstrecken" zu verstehen, dass der zweite Vereinigungs-Gehäuseabschnitt 120 eine räumliche Ausdehnung, beispielsweise eine Länge, entlang der zweiten Richtung 153 hat. Die Länge kann beispielsweise durch die Verbindungslinie der Mittelpunkte der gegenüberliegenden Öffnungen 130, 132 definiert werden. Die zweite Richtung 153 verläuft im Wesentlichen quer zur Einströmrichtung 151, also mit einer vorgegebenen Toleranz orthogonal zur Einströmrichtung, beispielsweise mit einer Toleranz von ±30°. Beispielsweise kann die zweite Richtung 153 im Verhältnis zur Einströmrichtung 151 einen Winkel von 90° aufweisen, der Winkel kann aber auch in einem Bereich von 80° - 100° liegen, oder in einem Bereich von 70° - 110° oder 60° - 120°. Der Vereinigungs-Gehäuseabschnitt 120 kann einen Innenraum aufweisen, der sich entlang der zweiten Richtung ausdehnt oder erstreckt. Der Vereinigungs-Gehäuseabschnitt 120 kann dazu eingerichtet sein, einen Abgasstrom, insbesondere einen zweiten Abgasstrom 152 entlang der zweiten Richtung 153 zu führen.

Gemäß der im Zusammenhang mit Figur 1 beschriebenen Ausführungsform umfasst der Vereinigungs-Gehäuseabschnitt 120 zwei in der zweiten Richtung 153 gegenüberliegende Öffnungen 130, 132. Bei einer ersten Öffnung 130 kann es sich, wie in Figur 1 gezeigt, um eine Öffnung zum Aufnehmen eines zweiten Abgasstroms 152 handeln, beispielsweise um eine Einström-Öffnung für den zweiten Abgasstrom 152. Bei einer zweiten Öffnung 132 kann es sich, wie in Figur 1 gezeigt, um eine Öffnung zum Ausleiten eines zweiten Abgasstroms 152 handeln, beispielsweise eine Ausström-Öffnung, insbesondere eines mit einem ersten Abgasstrom 150 vereinigten zweiten Abgasstroms 152. Das Gasaustrittsgehäuse 100 kann, wie in Figur 1 gezeigt, so gestaltet sein, dass keine vorzuziehende Strömungsrichtung des zweiten Abgasstroms 152 vorgesehen ist. Bei z.B. einer Umkehr der Strömungsrichtung des zweiten Abgasstroms 152 kann die erste Öffnung 130 eine Ausström-Öffnung und die zweite Öffnung 132 eine Einström-Öffnung sein. Eine Umkehr der Strömungsrichtung des zweiten Abgasstroms 152 kann für das Gasaustrittsgehäuse 100 während des Betriebs vorgesehen sein.

Gemäß der im Zusammenhang mit Figur 1 beschriebenen Ausführungsform strömt der verzögerte erste Abgasstrom 150 vorwiegend in einer Strömungsrichtung, die im Wesentlichen der Einströmrichtung 151 entspricht (etwa mit einer Toleranz von ±30°, in Ausführungsformen sogar von ±15°). Der zweite Abgasstrom 152 strömt von der ersten Öffnung 130 hin zur zweiten Öffnung 132 entlang der zweiten Richtung 153. Gemäß der im Zusammenhang mit Figur 1 beschriebenen Ausführungsform kommt es bei dem Vereinigen des verzögerten ersten Abgasstroms 150 mit dem quer zum verzögerten ersten Abgasstrom 150 strömenden zweiten Abgasstrom 152 zu einer Umlenkung des verzögerten ersten Abgasstroms. Die Umlenkung geschieht hierbei gleichzeitig mit der Vereinigung des verzögerten ersten Abgasstroms 150 mit dem zweiten Abgasstrom 152 am Übergang vom Diffusor-Gehäuseabschnitt 110 zum Vereinigungs-Gehäuseabschnitt 120. Der vereinigte zweite Abgasstrom 152 umfasst den Volumenstrom des ersten Abgasstroms 150 und des zweiten Abgasstroms 152 zum Zeitpunkt der Aufnahme des zweiten Abgasstroms 152 in der ersten Öffnung 130. Der vereinigte zweite Abgasstrom strömt entlang der zweiten Richtung 153.

Gemäß der im Zusammenhang mit Figur 1 beschriebenen Ausführungsform kann der Diffusor-Gehäuseabschnitt 110 in den Vereinigungs-Gehäuseabschnitt 120 hineinragen. Als hineinragen ist zu verstehen, dass der Diffusor-Gehäuseabschnitt zumindest teilweise vom Vereinigungs-Gehäuseabschnitt umschlossen ist. Ein vollständiges Hineinragen ist möglich, sodass sich der Diffusor-Gehäuseabschnitt des Gasaustrittsgehäuses bei außenseitiger Betrachtung des Gasaustrittsgehäuses ausschließlich durch eine Einström-Öffnung erkennbar macht. Das zumindest teilweise Hineinragen des Diffusor-Gehäuseabschnitts in den Vereinigungsgehäuseabschnitt kann eine kompakte Ausführung des Gasaustrittsgehäuses ermöglichen und einen günstigen Einfluss auf die Strömung des ersten und/oder des zweiten Abgasstroms haben.

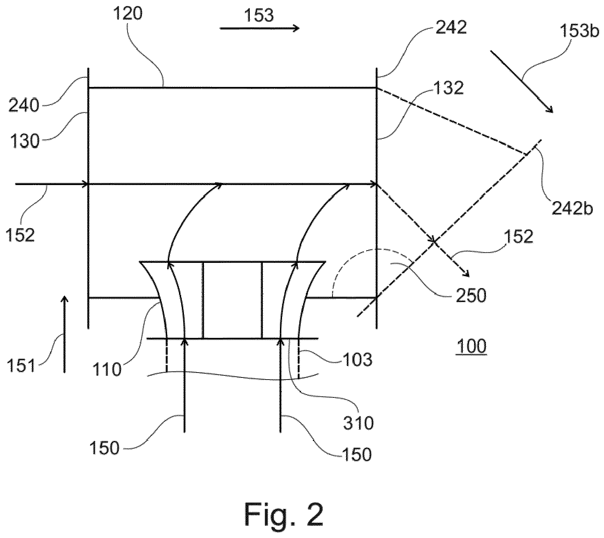

Figur 2 zeigt ein Gasaustrittsgehäuse 100 für einen Abgasturbolader 102 gemäß einer Ausführungsform. Bei dem in Figur 2 gezeigten Gasaustrittsgehäuse kann es sich um ein Gasaustrittsgehäuse 100 gemäß einer in Bezug auf Figur 1 beschriebenen Ausführungsform handeln. Das in Figur 2 beschriebene Gasaustrittsgehäuse zeichnet sich gemäß einem Aspekt durch eine überwiegend rohrartige Gestaltung des Vereinigungs-Gehäuseabschnitts 120 aus, wobei die zweite Richtung 153 der Längsrichtung des überwiegend rohrartigen Vereinigungs-Gehäuseabschnitts 120 entspricht.

Gemäß der in Zusammenhang mit Figur 2 beschriebenen Ausführungsform, welche mit weiteren hierin beschriebenen Ausführungsformen kombinierbar ist, kann das Gasaustrittsgehäuse einen oder mehrere Flansche 240, 242 umfassen. Die Flansche 240, 242 können an den Öffnungen 130, 132 vorgesehen sein. Ebenso kann ein Flansch an weiteren Öffnungen des Gasaustrittsgehäuses 100 vorgesehen sein, beispielsweise der Einström-Öffnung des Diffusor-Gehäuseabschnitts 110 für den ersten Abgasstrom 150. Die Flansche können zur Verbindung mit bzw. zum Anschluss von weiteren Komponenten eines Abgassystems vorgesehen sein. Die weiteren Komponenten können direkt unter Verwendung des Flansches an das Gasaustrittsgehäuse gekoppelt werden. Die Flansche können für die Verbindung mit weiteren Komponenten, wie z.B. weiteren Flanschen, beispielsweise mit Hilfe von Bolzen, Schellen oder Klemmbändern vorgesehen sein. Beispielsweise können V-Band-Flansche bzw. T-Flansche vorgesehen sein. Der Flansch kann zum Anbringen von zumindest teilweise flexiblen Verbindungsstücken, wie beispielsweise Kompensatoren, vorgesehen sein. Auf günstige Ausführungsformen eines Gasaustrittsgehäuses mit Kompensatoren wird an späterer Stelle genauer eingegangen.

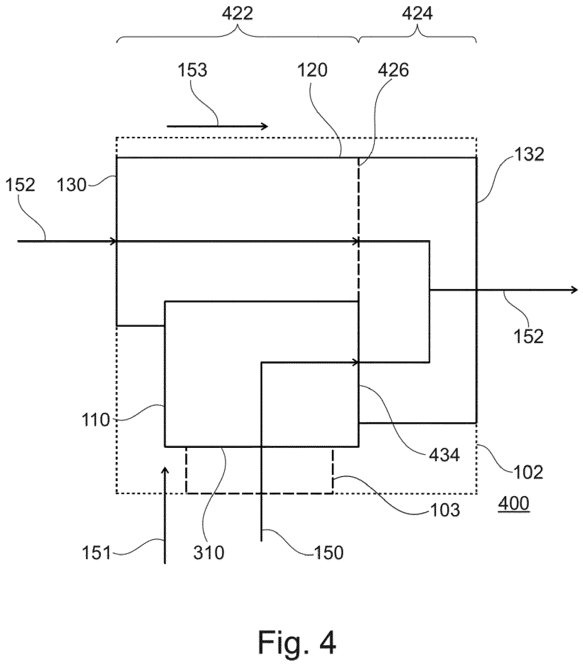

Gemäß von Ausführungsformen, welche mit weiteren hierin beschriebenen Ausführungsformen kombinierbar sind, kann ein erfindungsgemäßes Gasaustrittsgehäuse, beispielsweise das in Zusammenhang mit Figur 2 beschriebene Gasaustrittsgehäuse 100, sowie beispielsweise auch das zu späterer Stelle in Zusammenhang mit Figur 4 beschriebene Gasaustrittsgehäuse 400, einen oder mehrere abgewinkelte Flansche, wie etwa den abgewinkelten Flansch 242b beinhalten. Der Flansch kann eine beispielsweise ringförmige Verbreiterung umfassen. Der Richtung eines Flansches kann in dem hierin beschriebenen Zusammenhang als die Richtung der Flächennormale des Flansches verstanden werden, wobei die Fläche des Flansches als die durch den Flansch definierte Ebene verstanden werden kann (z.B. die durch den Flansch definierte Auflagefläche für einen mit dem Flansch zu verbindenden weiteren Leitungsflansch, beispielsweise die ringförmige Verbreiterung). Ein Flansch kann dann als abgewinkelt verstanden werden, wenn er nicht quer, also nicht in einem Winkel von etwa 90°, zur Einströmrichtung 151 angebracht ist. Der Flansch kann auch dann als abgewinkelt verstanden werden, wenn die zweite Richtung 153 sich im Vereinigungsgehäuseabschnitt ändert, sodass die zweite Richtung nicht einer Geraden entspricht. Die Änderung der zweiten Richtung kann, wie in Figur 2 gezeigt, abschnittsweise erfolgen. Die Änderung der zweiten Richtung kann kontinuierlich erfolgen, beispielsweise wenn der Vereinigungs-Gehäuseabschnitt bogenartig gestaltet ist. Der abgewinkelte Flansch 242b kann derart ausgeführt sein, dass in einem Teilbereich des Vereinigungs-Gehäuseabschnitts 120 die Strömungsrichtung des zweiten Abgasstroms 152 und/oder die zweite Richtung 153b beispielsweise durch eine Anpassung der Form des Vereinigungs-Gehäuseabschnitts 120 geändert bzw. umgelenkt wird. Der abgewinkelte Flansch 242b, welcher typischerweise die zweiten Richtung 153 im Bereich des Flansches in einer Ebene radial umspannt, kann auf einer von der Einströmrichtung 151 und der zweiten Richtung 153 gebildeten Ebene in Bezug auf die Einströmrichtung beispielsweise in einem Winkel von 135° abgewinkelt sein, wie es in Figur 2 mit Winkel 250 gezeigt ist. Abgewinkelte Flansche mit einem Winkel 250 können in einem weiten Bereich ausgeführt sein, beispielsweise mit einem Winkel, der in einem Bereich von 40°-140° in Bezug auf die Einströmrichtung 151 liegt, so wie etwa 60°-120° oder 80°-100°. Mit dem abgewinkelten Flansch 242b geht typischerweise auch eine abgewinkelte Öffnung 132 einher.

Durch einen abgewinkelten Flansch kann sich eine vorteilhafte Bauform des Gasaustrittsgehäuses ergeben. Insbesondere kann das Gasaustrittsgehäuse in günstiger Weise mit anderen Komponenten, beispielsweise weiteren Komponenten eines Abgassystems verbunden werden. Durch das Vorhandensein eines abgewinkelten Flanschens kann das Gasaustrittsgehäuse kompakt und platzsparend ausgeführt werden. Durch das Vorhandensein eines abgewinkelten Flansches kann der zweite Abgasstrom auf günstige Weise geführt werden, sodass unvorteilhafte Strömungen und die damit einhergehenden, höheren Strömungswiderstände, beispielsweise durch Ablösungen oder Wirbel, vermieden werden.

Gemäß der in Zusammenhang mit Figur 2 beschriebenen Ausführungsform des Gasaustrittsgehäuses 100 kann der Diffusor-Gehäuseabschnitt 110 so ausgeführt sein, dass im Bereich des Diffusor-Gehäuseabschnitts 110 die Richtung des ersten Abgasstroms 150 im Wesentlichen beibehalten wird. Die Wirkung des Diffusor-Gehäuseabschnitts 110 als Diffusor beruht darauf, dass sich der Querschnitt des Strömungsraums in Einströmrichtung 151 in radialer Richtung aufweitet. Insbesondere kann sich der Diffusor-Gehäuseabschnitt 110 sich in Strömungsrichtung des ersten Abgasstroms 150 kontinuierlich aufweiten. Insbesondere kann der Diffusor-Gehäuseabschnitt 110 als konischer Diffusor ausgeführt sein. Der Diffusor-Gehäuseabschnitt 110 kann einen Bereich umfassen, der nicht vom ersten Abgasstrom durchströmt wird, wie z.B. den im Zentrum des Diffusor-Gehäuseabschnitt 110 liegenden Totraum. Der Totraum kann bei größeren Strömungsquerschnitten nötig sein, um ein verzögerungsfreies Durchströmen des Diffusor-Gehäuseabschnitts 110 von zentral liegenden Teilen des ersten Abgasstroms 150 zu verhindern.

Gemäß der in Zusammenhang mit Figur 2 beschriebenen Ausführungsform kommt es am Übergang vom Diffusor-Gehäuseabschnitt 110 zum Vereinigungs-Gehäuseabschnitt zu einer Vereinigung des ersten Abgasstroms 150 mit dem quer zum ersten Abgasstrom 150 entlang der zweiten Richtung 153 strömenden zweiten Abgasstrom 152.

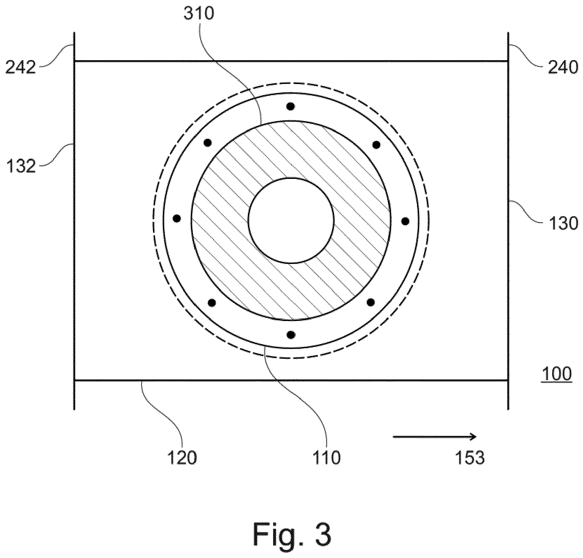

Figur 3 zeigt ein Gasaustrittsgehäuse 100 für einen Abgasturbolader gemäß einer Ausführungsform. Bei dem in Figur 3 gezeigten Gasaustrittsgehäuse kann es sich um ein Gasaustrittsgehäuse 100 gemäß einer der zuvor beschriebenen Ausführungsformen handeln. Insbesondere kann es sich um eine Draufsicht auf eine Einström-Öffnung des Diffusor-Gehäuseabschnitts 110 eines Gasaustrittsgehäuses 100 gemäß des in Zusammenhang mit Figur 2 beschriebenen Gasaustrittsgehäuses 100 handeln.

Gemäß der in Zusammenhang mit Figur 3 beschriebenen Ausführungsform umfasst der Diffusor-Gehäuseabschnitt 110 eine kreisartige Einström-Öffnung 310, die außenseitig von einem Flansch begrenzt ist. Der Flansch kann dazu dienen, das Gasaustrittsgehäuse 100 mit einem Abgasturbolader fluidisch zu verbinden, sodass ein vom Abgasturbolader stammender erster Abgasstrom in den Diffusor-Gehäuseabschnitt 110 des Gasaustrittsgehäuses 100 einströmt. Die kreisartige Einström-Öffnung 310 umfasst weiterhin einen inneren, kreisrunden, verschlossenen Bereich. Hierbei kann es sich um eine Grenzfläche, beispielsweise eine Wand, des im Zusammenhang mit Figur 2 beschriebenen Totraums handeln.

Gemäß von Ausführungsformen des Gasaustrittsgehäuses 100 erfolgt die Umlenkung des ersten Abgasstroms 150, der beim Durchströmen des Diffusor-Gehäuseabschnitts 110 die Einströmrichtung 151 im Wesentlichen beibehält, im Vereinigungsgehäuseabschnitt 120. Die Umlenkung erfolgt typischerweise in Richtung der zweiten Richtung 153. In einem Beispiel kann die Umlenkung hauptsächlich durch die Vereinigung des ersten Abgasstroms 150 mit dem zweiten Abgasstrom 152 erfolgen. Dies setzt voraus, dass ein zweiter Abgasstrom 152 vorhanden ist, der entlang der zweiten Richtung 153 strömt. Ein strömungstechnisch vorteilhaftes Umlenken des ersten Abgasstroms 150 kann voraussetzen, dass der Volumenstrom des zweiten Abgasstroms 152 im Verhältnis zum ersten Abgasstrom 150 in etwa gleich hoch oder höher ist.

Gemäß von Ausführungsformen des Gasaustrittsgehäuses 100 kann es jedoch auch möglich sein, dass kein zweiter Abgasstrom 152 vorhanden ist und dennoch eine Umlenkung des ersten Abgasstroms 150 nach dem Verlassen des Diffusor-Gehäuseabschnitts 110 im Vereinigungs-Gehäuseabschnitt 120 gemäß einer vorhergesehenen Betriebsart erfolgt. In einem Beispiel kann dies dadurch erreicht werden, dass das Gasaustrittsgehäuse in einem Abgassystem eingebunden ist, in dem das Einströmen des ersten Abgasstroms zu einem Staudruck im Abgassystem führt. Das Abgassystem kann so gestaltet sein, dass der Staudruck dazu führt, dass der Abgasstrom im Vereinigungs-Gehäuseabschnitt ausschließlich aus einer Öffnung 130, 132 entweichen kann. Das kann beispielsweise dann vorkommen, wenn eine der Öffnungen 130, 132 mit einer Komponente verbunden ist, die ein freies Ausströmen des Abgasstroms aus dieser Öffnung verhindert, beispielsweise einem stillstehenden Abgasturbolader oder einem Rohr mit einem Blindflansch, während die zweite der Öffnungen 130, 132 beispielsweise in weiterer Folge in einen Schornstein mündet und so das freie Ausströmen des Abgasstroms ermöglicht.

Figur 4 zeigt schematisch ein Gasaustrittsgehäuse 400 für einen Abgasturbolader 102 gemäß einer Ausführungsform. Viele der im Zusammenhang mit dem Gasaustrittsgehäuse 100 beschriebenen Merkmale sind auf das Gasaustrittsgehäuse 400 übertragbar und werden deshalb nicht erneut beschrieben. Im Gegensatz zum Gasaustrittsgehäuse 100 umfasst das Gasaustrittsgehäuse 400 einen Diffusor-Gehäuseabschnitt 110, in dem sich die Strömungsrichtung des ersten Abgasstroms 150 beim Durchströmen des Diffusor-Gehäuseabschnitts ändert und somit der erste Abgasstrom 150 umgelenkt wird.

Gemäß der in Zusammenhang mit Figur 4 beschriebenen Ausführungsform kann der erste Abgasstrom 150 in einer Einströmrichtung 151 in den Diffusor-Gehäuseabschnitt 110 einströmen. Während des Durchströmens des Diffusor-Gehäuseabschnitts 110 wird der erste Abgasstrom 150 in der gezeigten Ausführungsform gleichzeitig verzögert und umgelenkt. Der verzögerte erste Abgasstrom 150 wird über eine Einleite-Öffnung 434 in den Vereinigung-Gehäuseabschnitt 120 eingeleitet. Die Strömungsrichtung des verzögerten ersten Abgasstroms 150 kann beim Einleiten über die Einleite-Öffnung 434 im Wesentlichen der Strömungsrichtung des zweiten Abgasstroms 152 entsprechen, welcher entlang der zweiten Richtung 153 strömt. Die Strömungsrichtung des verzögerten ersten Abgasstroms 150 kann auch nur teilweise der zweiten Richtung 153 entsprechen, sodass im Vereinigungs-Gehäuseabschnitt 120 eine weitere Umlenkung von Teilen des ersten Abgasstroms 150 geschieht. Die Umlenkung kann, vergleichbar zum Gasaustrittsgehäuse 100 gemäß einer zuvor beschriebenen Ausführungsform, während der Vereinigung des ersten Abgasstroms 150 mit dem zweiten Abgasstrom 152 erfolgen.

Gemäß der in Zusammenhang mit Figur 4 beschriebenen Ausführungsform kann der Vereinigungs-Gehäuseabschnitt 120 des Gasaustrittsgehäuses 400 zwei Strömungsräume umfassen. Der erste Strömungsraum 422 kann ein Strömungsraum sein, in dem ausschließlich ein zweiter Abgasstrom 150 strömt, wie er zuvor durch die Öffnung 130 eingeströmt ist. Der zweite Strömungsraum kann 424 kann ein Strömungsraum sein, in dem der zweite Abgasstrom 152 mit dem verzögerten ersten Abgasstrom 150 zu einem vereinigten zweiten Abgasstrom 152 vereinigt wird. Der Übergangsbereich 426 vom ersten Strömungsraum 422 zum zweiten Strömungsraum 424 kann durch das erstmalige Ausströmen eines verzögerten ersten Abgasstroms 150 entlang der zweiten Richtung 153 aus einer Einleite-Öffnung 434 in den Vereinigungs-Gehäuseabschnitt 120 beschrieben werden. Der Übergangsbereich 426 kann als der Bereich beschrieben werden, in dem der zweite Abgasstrom 152 erstmals mit dem verzögerten ersten Abgasstrom 150 vereinigt wird.

Gemäß der in Zusammenhang mit Figur 4 beschriebenen Ausführungsform hat das Gasaustrittsgehäuse 400, anders als Ausführungsformen des Gasaustrittsgehäuses 100, eine Vorzugsrichtung für den zweiten Abgasstrom und damit die zweite Richtung 153. Da der erste Abgasstrom bereits im Diffusor-Gehäuseabschnitt 110 zumindest teilweise in Richtung der Öffnung 132 umgelenkt wird, ist es für das Gasaustrittsgehäuse 400 vorgesehen, dass die erste Öffnung 130 eine Einström-Öffnung für einen zweiten Abgasstrom 152 ist, und dass die zweite Öffnung 132 eine Ausström-Öffnung für den vereinigten zweiten Abgasstrom 152 ist.

Durch die zumindest teilweise Umlenkung des ersten Abgasstroms 150 im Diffusor-Gehäuseabschnitt 110 kann erreicht werden, dass der verzögerte erste Abgasstrom 150 und der zweite Abgasstrom 152 zum Zeitpunkt der Vereinigung bereits zumindest teilweise in dieselbe Richtung strömen. Dadurch kann vorteilhafterweise der Strömungswiderstand des Gehäuses reduziert werden. Vorteilhafterweise kann das Entstehen von Ablösungen oder Wirbeln zumindest teilweise verhindert werden, wodurch ein günstiges Strömungsverhalten des vereinigten zweiten Abgasstroms erreicht werden kann.

Gemäß der in Zusammenhang mit Figur 4 beschriebenen Ausführungsform kann sich der Querschnitt des Vereinigungs-Gehäuseabschnitts 120 entlang der zweiten Richtung 153 aufweiten. Der Querschnitt ist dann als aufgeweitet zu verstehen, wenn der Querschnitt der als Einström-Öffnung verwendeten Öffnung 130 niedriger ist als der Querschnitt der als Ausström-Öffnung verwendeten Öffnung 132. Ein abschnittsweises sich Verengen des Strömungsraums des Vereinigungs-Gehäuseabschnitts kann in manchen Ausführungsformen vorgesehen sein und ist nicht als Widerspruch zum sich Aufweiten des Querschnitts des Vereinigungs-Gehäuseabschnitts 120 zu verstehen.

Gemäß einer günstigen Ausführungsform, welche mit weiteren hierin beschriebenen Ausführungsformen kombinierbar ist, kann die Aufweitung des Querschnitts des Vereinigungs-Gehäuseabschnitts 120 derart ausgeführt werden, dass die Strömungsgeschwindigkeit des zweiten Abgasstroms 152 beim Einströmen durch die Öffnung 130 in etwa der Strömungsgeschwindigkeit des mit dem verzögerten ersten Abgasstrom 150 vereinigten zweiten Abgasstroms 152 beim Ausströmen durch die Öffnung 132 entspricht. Dadurch kann ein günstiges Strömungsverhalten des vereinigten zweiten Abgasstroms erreicht werden.

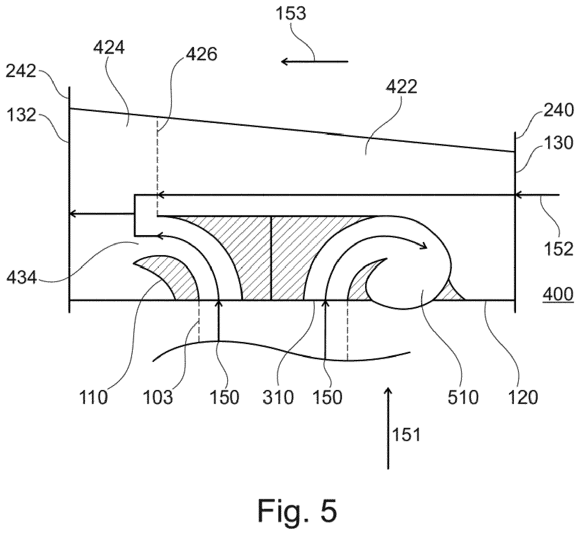

Figur 5 zeigt ein Gasaustrittsgehäuse 400 für einen Abgasturbolader 102 gemäß einer Ausführungsform. Bei dem in Figur 5 gezeigten Gasaustrittsgehäuse kann es sich um ein Gasaustrittsgehäuse 400 gemäß einer in Bezug auf Figur 4 beschriebenen Ausführungsform handeln.

Gemäß der in Zusammenhang mit Figur 5 beschriebenen Ausführungsform kann das Gasaustrittsgehäuse 400 einen Diffusor-Gehäuseabschnitt 110 mit einem sich in Umfangsrichtung des Diffusor-Gehäuseabschnitts 110 erstreckenden, zumindest teilweise spiralartigen Sammelabschnitt 510 aufweisen. Die Umfangrichtung kann dabei die Richtung sein, die die Einströmrichtung 151 radial umspannt. Die Umfangrichtung kann die Richtung sein, die normal zur Einströmrichtung 151 liegt. Der Sammelabschnitt kann eine im Wesentlichen ringartige Struktur sein, die zumindest teilweise einen spiralartigen Bereich aufweist. Der spiralartige Bereich kann sich radial zur Einströmrichtung spiralartig aufweiten. Der spiralartige Bereich kann im axialen Schnitt, beispielsweise der Einströmrichtung 151, spiralartig sein. Der Sammelabschnitt kann die Funktion eines Diffusors erfüllen. Der Bereich des Sammelabschnitts, der nicht zum spiralartigen Bereich zählt, kann eine Einleite-Öffnung 434 umfassen. Der Bereich des Sammelabschnitts, der nicht zum spiralartigen Bereich zählt, kann sich durch das Vorhandensein der Einleite-Öffnung 434 vom spiralartigen Sammelabschnitt 510 unterscheiden. Die Spiralform des spiralartigen Sammelabschnitts 510 wird in Fig. 5 in der von den Richtungen 151 und 153 gebildeten Schnittebene deutlich.

In der in der Figur 5 gezeigten Ausführungsform leitet der Sammelabschnitt den ersten Abgasstrom 150 radial um verzögert ihn. In weiterer Folge führt der spiralartige Sammelabschnitt den ersten Abgasstrom 150 in Umfangrichtung des Diffusor-Gehäuseabschnitts 110 weiter, bis der erste Abgasstrom 150 über die Einleite-Öffnung 434 in den Vereinigungs-Gehäuseabschnitt 120 austreten kann.

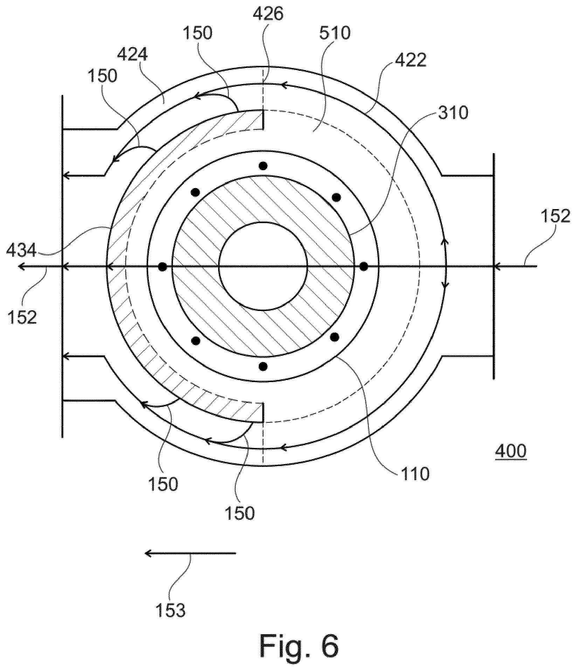

Figur 6 zeigt ein Gasaustrittsgehäuse 400 für einen Abgasturbolader gemäß einer Ausführungsform. Bei dem in Figur 6 gezeigten Gasaustrittsgehäuse kann es sich um ein Gasaustrittsgehäuse 400 gemäß einer der zuvor beschriebenen Ausführungsformen handeln. Insbesondere kann es sich um eine Draufsicht auf eine Einström-Öffnung des Diffusor-Gehäuseabschnitts 110 eines Gasaustrittsgehäuses 400 gemäß des in Zusammenhang mit Figur 5 beschriebenen Gasaustrittsgehäuses 400 handeln. Zum besseren Verständnis wurden auch im Inneren des Gasaustrittsgehäuses 400 liegende Merkmale gezeichnet, insbesondere Merkmale des Diffusor-Gehäuseabschnitts 110.

In der in Figur 6 gezeigten Ausführungsform wird deutlich, dass die Verzögerung des ersten Abgasstroms 150 vorrangig durch die Umleitung des ersten Abgasstroms in eine radiale Richtung geschieht. Die Verzögerung des ersten Abgasstroms geschieht somit unabhängig vom zweiten Abgasstrom. Die Umleitung in eine radiale Richtung hat zur Folge, dass der dem ersten Abgasstrom 150 zur Verfügung stehende Querschnitt entlang der Strömungsrichtung mit zunehmendem Radius steigt. Durch die Umleitung in radiale Richtung strömt der verzögerte erste Abgasstrom nur teilweise in die gewünschte Richtung 153. Um ein anteiliges Entgegenströmen des verzögerten ersten Abgasstroms 150 gegen den zweiten Abgasstrom 152 zu vermeiden, umfasst der Diffusor-Gehäuseabschnitt 110 in der in Figur 6 gezeigten Ausführungsform nur dort eine Einleite-Öffnung 434, wo die Richtung des verzögerten ersten Abgasstroms 150 bereits in etwa der zweiten Richtung entspricht. Dazu ist der Abschnitt des Diffusor-Gehäuseabschnitts 110, in dem die Richtung des verzögerten ersten Abgasstroms 150 eine Vektorkomponente enthält, die entgegen der Richtung 153 zeigt, als spiralartiger Sammelabschnitt 510 ausgeführt. Im spiralartigen Sammelabschnitt 510 wird der dort einströmende, erste Abgasstrom 150 verzögert und zusätzlich zur radialen Richtung weiterhin entlang der Umfangrichtung des Diffusor-Gehäuseabschnitts 110 umgelenkt. Beim Ausströmen aus der Einleite-Öffnung 434 hat der verzögerte erste Abgasstrom somit keine dem zweiten Abgasstrom 152 entgegenströmende Richtungskomponente mehr.

In der in Figur 6 gezeigten Ausführungsform wird deutlich, dass auch trotz der Umlenkung des ersten Abgasstroms im spiralartigen Sammelabschnitt 510 eine weitere Umlenkung des verzögerten ersten Abgasstroms 150 hin zur zweiten Richtung 153 erfolgen kann. Dies kann, wie in Figur 6 gezeigt, im zweiten Strömungsraum des Vereinigungs-Gehäuseabschnitts erfolgen. In manchen Ausführungsformen kann es vorteilhaft sein, den radialen Öffnungswinkel der Einleite-Öffnung 434 zu verkleinern, sodass der verzögerte erste Abgasstrom 150 beim Einströmen in den Vereinigungs-Gehäuseabschnitt bereits vermehrt entlang der zweiten Richtung strömt. Hierbei ist zu beachten, dass eine Verengung der Einleite-Öffnung zu einer Erhöhung des Strömungswiderstands im Diffusor-Gehäuseabschnitt 110 führen kann. In der in Figur 6 gezeigten Ausführungsform hat die Einleite-Öffnung 434 des Diffusor-Gehäuseschnitts einen Öffnungswinkel von 180°. In weiteren Ausführungsformen können Öffnungswinkel mit 160°, mit 150° oder mit 140° vorgesehen sein. Auch weiter verengte Öffnungswinkel von 90°-140° oder weniger als 90° können vorgesehen sein.

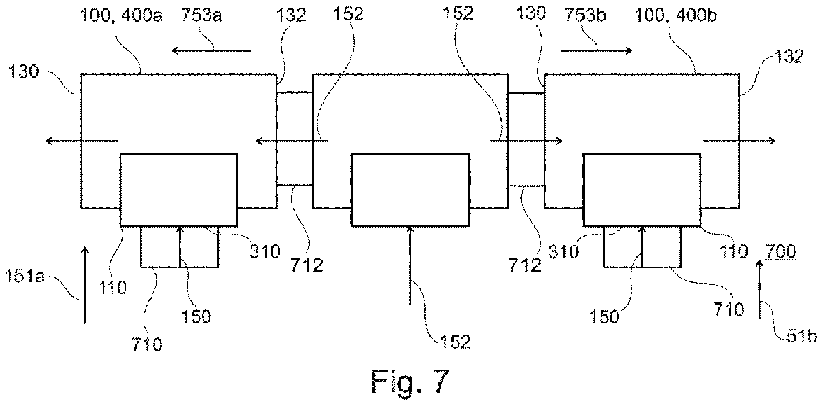

Figur 7 zeigt eine Anordnung 700 von drei Gasaustrittsgehäusen, wobei es sich bei den zwei außenliegenden Gasaustrittsgehäusen um Gasaustrittsgehäuse 100, 400a, 400b gemäß hierin beschriebenen Ausführungsformen handelt. Der Abgasturbolader 102 und die Turbine 103 sind der Übersichtlichkeit halber nicht eingezeichnet. Eines der außenliegenden Gasaustrittsgehäuse soll als zweites Gasaustrittsgehäuse bezeichnet werden. Das innenliegende, mittlere Gasaustrittsgehäuse kann ein weiteres Gasaustrittsgehäuse gemäß einer nicht beanspruchten Ausführungsform sein und wird als erstes Gasaustrittsgehäuse bezeichnet. Eine Anordnung 700 gemäß Figur 7 kann dazu vorgesehen sein, mehrere parallele erste Abgasströme, wie sie beispielsweise aus mehreren nebeneinander angeordneten, beispielsweise entlang einer Gerade aufgereihten Turboladern entstammen, einem Abgassystem zuzuführen. Die parallelen ersten Abgasströme können entlang der Einströmrichtung 151a und/oder 151b strömen. Die Verbindung der jeweiligen Gasaustrittsgehäuse untereinander, beispielsweise zwischen einem ersten und einem zweiten Gasaustrittsgehäuse, oder zwischen zwei zweiten Gasaustrittsgehäusen, kann in einer Ausführungsform durch das direkte Verbinden der Flansche 240, 242 erfolgen.

Wie in Figur 7 gezeigt kann ein zweites Gasaustrittsgehäuse 100, 400a, 400b, bei dem es sich um ein Gasaustrittsgehäuse gemäß einer hierin beschriebenen Ausführungsform handeln kann, einen oder mehrere Kompensatoren 710, 712 umfassen. Der erste Kompensator 710 befindet sich hierbei zwischen einer Turbine eines Abgasturboladers und dem Diffusor-Gehäuseabschnitt 110 des zweiten Gasaustrittsgehäuses und verbindet den aus der Turbine des Abgasturboladers austretenden Gasstrom fluidisch mit dem Diffusor-Gehäuseabschnitt 110. Der erste Kompensator 710 kann einen aus der Turbine des Abgasturboladers stammenden ersten Abgasstrom 150 in das zweite Gasaustrittsgehäuse einleiten. Der zweite Kompensator 712 befindet sich zwischen einer Öffnung 130, 132 des ersten Gasaustrittsgehäuses und einer Ausleite-Öffnung des ersten Gasaustrittsgehäuses. Der zweite Kompensator 712 kann einen aus dem ersten Gasaustrittsgehäuse stammenden zweiten Abgasstrom 152 in eine Öffnung 130, 132 das Gasaustrittsgehäuses einleiten. Der Kompensator 710, 712 kann mit dem Gasaustrittsgehäuse an einem dafür vorgesehenen Flansch 240, 242 verbunden sein.

Bei den Kompensatoren 710, 712 kann es sich um teilflexible Bauteile handeln, die dazu geeignet sind, heiße Abgase zu führen. Die Kompensatoren können dazu eingerichtet sein, Abgase mit einem Überdruck gegenüber der Außenseite von bis zu 5 bar zu führen. Der Kompensator kann jeweils in Form eines Balges ausgeführt sein, der zwischen zwei Flanschen angebracht ist. Der Balg kann aus gefalztem Edelstahlblech gefertigt sein. Die Flansche des Kompensators können dazu eingerichtet sein, mit an den Gasaustrittsgehäusen vorgesehenen Flanschen verbunden werden. Der Kompensator kann ein Axialkompensator sein. Der Kompensator kann dazu eingerichtet sein, axiale und laterale bzw. radiale Bewegungen auszugleichen. Der Kompensator kann dazu eingerichtet sein, aufgrund von thermischer Expansion auftretende Spannungen zwischen den jeweiligen Bauteilen, beispielsweise zwischen einem Abgasturbolader und einem Gasaustrittsgehäuse, zu vermeiden. Der Kompensator kann dazu eingerichtet sein, eine Übertragung von Vibrationen zwischen den jeweiligen Bauteilen zu vermeiden. Der Kompensator kann teilweise in das Gasaustrittsgehäuse hineinragen.

Gemäß der in Figur 7 gezeigten Ausführungsform ist es für das zweite Gasaustrittsgehäuse vorgesehen, mit einem ersten Gasaustrittsgehäuse fluidisch verbunden werden. Aus dem ersten Gasaustrittsgehäuse entstammt ein zweiter Abgasstrom 152. Der zweite Abgasstrom 152 wird in eine Öffnung 130, 132 des zweiten Gasaustrittsgehäuses eingeleitet. Der zweite Abgasstrom kann im jeweiligen Gasaustrittsgehäuse 100, 400a, 400b entlang einer zweiten Richtung 753a, 753b strömen. Bei der zweiten Richtung 753a, 753b kann es sich, bezogen auf das zweite Gasaustrittsgehäuse, um eine zweite Richtung 153 handeln. Aus einem Abgasturbolader 102 stammt ein erster Abgasstrom 150. Der erste Abgasstrom 150 kann in das zweite Gasaustrittsgehäuse eingeleitet werden. Der erste Abgasstrom 150 kann, gemäß hierin beschriebenen Ausführungsformen, in einen Diffusor-Gehäuseabschnitt des zweiten Gasaustrittsgehäuses eingeleitet werden. Der erste Abgasstrom 150 und der zweite Abgasstrom 152 werden in dem zweiten Gasaustrittsgehäuse zu einem vereinigten zweiten Abgasstrom vereinigt.

In der in Figur 7 gezeigten Ausführungsform ist eine beispielhafte Anordnung aus einem zentralen ersten Gasaustrittsgehäuse und zwei peripher dazu angeordneten zweiten Gasaustrittsgehäusen gezeigt. Gemäß weiterer Ausführungsformen kann es auch vorgesehen sein, dass es sich bei dem ersten Gasaustrittsgehäuse ebenfalls um ein Gasaustrittsgehäuse 100, 400 gemäß hierin beschriebener Ausführungsformen handelt. Erfindungsgemäß kann dann jedes zweite Gasaustrittsgehäuse 100, 400 der Anordnung dazu eingerichtet sein, mit einem weiteren Gasaustrittsgehäuse 100, 400 fluidisch verbunden zu werden, sodass ein aus einer Öffnung 132 ausströmender vereinigter zweiter Abgasstrom eines Gasaustrittsgehäuses der Anordnung in eine Öffnung 130 eines weiteren Gasaustrittsgehäuses der Anordnung eingeleitet wird. Im Gegensatz zu der in Figur 7 gezeigten Anordnung ist es beispielsweise möglich, dass drei erste Abgasströme und ein zweiter Abgasstrom zu einem vereinigten zweiten Abgasstrom vereinigt werden sollen. Bei der genannten Problemstellung würden beispielsweise drei Gasaustrittsgehäuse seriell so verbunden, dass jedes Gasaustrittsgehäuse einen zweiten Abgasstrom über eine Öffnung 130 aufnimmt, mit dem verzögerten ersten Abgasstrom vereinigt und als vereinigten zweiten Abgasstrom an das folgende Gehäuse (sofern vorhanden) weiterleitet. Am Ende der Anordnung kann zum Aufnehmen des vereinigten zweiten Abgasstroms beispielsweise ein Abgassystem, beispielsweise in Form eines Schornsteins folgen.

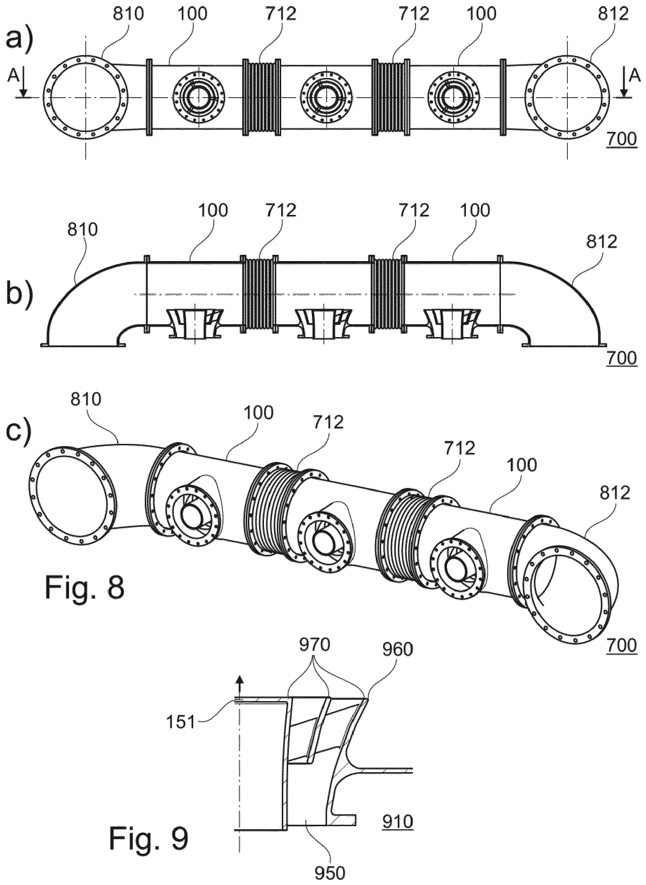

Figur 8 zeigt eine Anordnung 700 von drei Gasaustrittsgehäusen, wobei es sich bei den zwei außenliegenden Gasaustrittsgehäusen um Gasaustrittsgehäuse 100 gemäß hierin beschriebenen Ausführungsformen handelt. Die Darstellungen a, b, c der Figur 8 entsprechen jeweils unterschiedlichen Perspektiven derselben Anordnung. Bei der in Figur 8 gezeigten Anordnung kann es sich um eine Ausführungsform gemäß der im Zusammenhang mit Figur 7 beschriebenen Anordnung 700 handeln. In Figur 8 wird insbesondere eine vorteilhafte Anordnung der zweiten Kompensatoren 712 deutlich, bei der eine Führung der vereinigten zweiten Abgasströme zwischen den jeweiligen Gasaustrittsgehäusen ohne eine nachteilige Verringerung des Leitungsquerschnitts erreicht wurde. Weiterhin wird deutlich, dass die Anordnung bereits weitestgehend rohrartig ist, wodurch die in Bezug auf den reduzierten Platzbedarf vorteilhafte Eigenschaft des unmittelbar auf den Diffusor-Gehäuseabschnitt folgenden Verteilerabschnitts bzw. des teilweise innerhalb des Vereinigungs-Gehäuseabschnitts liegenden Diffusor-Gehäuseabschnitts deutlich wird.

Gemäß der in Figur 8 gezeigten Ausführungsform der Anordnung 700 können zusätzlich Ableitungen 810, 812 vorgesehen sein. Die Ableitungen 810, 812 können, wie in Figur 8 gezeigt, eine Umlenkung des darin strömenden Abgasstroms bewirken. Unter der Annahme, dass in jedes Gasaustrittsgehäuse der Anordnung 700 ein vergleichbarer erster Abgasstrom einströmt, kann, wenn die auf die Ableitungen 810, 812 folgenden Abgassysteme vergleichbare Eigenschaften haben, mit der Anordnung 700 eine gleichmäßige Aufteilung der drei ersten Abgasströme in zwei vereinigte zweite Abgasströme erreicht werden. Für den ebenso möglichen Fall, dass eine der Ableitungen 810, 812 verschlossen ist oder das darauf folgende Abgassystem einen erheblichen Strömungswiderstand aufweist, sowie für den Fall, dass in eine der Ableitungen 810, 812 ein zweiter Abgasstrom einströmt, kann es sich in der in Figur 8 gezeigten Anordnung 700 auch bei dem zentralen, innenliegenden Gasaustrittsgehäuse um ein erfindungsgemäßes Gasaustrittsgehäuse 100 handeln.

Figur 9 zeigt eine schematische Schnittansicht entlang der Einströmrichtung durch einen Teil eines Diffusor-Gehäuseabschnitts 910 eines Gasaustrittsgehäuses gemäß einer Ausführungsform. Bei dem Diffusor-Gehäuseabschnitt 910 kann es sich um eine Ausführungsform eines Diffusor-Gehäuseabschnitts 110 handeln, beispielsweise eines Gasaustrittsgehäuses 100, beispielsweise gemäß einer der in Figur 1, 2, 3, 7 oder 8 gezeigten Ausführungsformen. Insbesondere kann die gezeigte Ausführungsform des Diffusor-Gehäuseabschnitts 110 für eine Anordnung von Gasaustrittsgehäusen 700 vorgesehen sein.

Der Diffusor-Gehäuseabschnitt 910 zeichnet sich durch die Ausführung als axialer Diffusor aus. Der Diffusor-Gehäuseabschnitt 910 nimmt unterseitig einen ersten Abgasstrom in einem Strömungsraum 950 auf und führt ihn entlang der Einströmrichtung 151 weiter. Hierbei weitet sich der Strömungsraum 950 kontinuierlich nach außen hin auf, wodurch der Diffusor-Gehäuseabschnitt 910 als Diffusor wirkt. Der Diffusor-Gehäuseabschnitt 910 umfasst die Wände 970, wobei auf der gesamten Länge des Strömungsraums eine Innen- und eine Außenwand vorgesehen sind. Die Außenwand dient hierbei teilweise als Abgrenzung 960 zum Strömungsraum eines Vereinigungs-Gehäuseabschnitts. Auf etwa halber Höhe des Strömungsraums 950 kommt eine zwischen der Innenwand und der Außenwand liegende innere Trennwand hinzu, die den Strömungsraum 950 in einen inneren und einen äußeren Strömungsraum trennt. Durch die Trennwand wird gewährleistet, dass der Öffnungswinkel des Diffusor-Gehäuseabschnitts einen Wert von 7,5° nicht überschreitet. Durch Verkleinerung des Öffnungswinkels kann ein überkritisches Strömen des ersten Abgasstroms vermieden werden, wodurch es nicht zu ungünstiger Dissipation, wie z.B. Ablösungen des Abgasstroms von einer der Wände 970 oder Verwirbelung kommt.

Gemäß einer Ausführungsform, können die in Figur 7 und 8 gezeigten Gasaustrittsgehäuse 100, 400 jeweils einen Abgasturbolader 102 umfassen. Der Abgasturbolader 102 kann fluidisch mit dem jeweiligen Gasaustrittsgehäuse verbunden sein. Das Gasaustrittsgehäuse 100, 400 kann Teil des Abgasturboladers 102 sein, sodass der Abgasturbolader 102 das Gasaustrittsgehäuse umfasst. Der erste Abgasstrom kann ein aus der Turbine, insbesondere der abgasseitigen Turbine des Abgasturboladers 102 stammende Abgasstrom sein. Der Abgasturbolader kann ein Axial-Abgasturbolader sein.

Gemäß einem Aspekt umfasst die vorliegende Erfindung die Verwendung eines Gasaustrittsgehäuses 100, 400 nach einer hierin beschriebenen Ausführungsform in einem Abgassystem eines oder mehrerer Verbrennungsmotoren mit Abgasturboladern. Die Verwendung setzt das Vorhandensein eines ersten Abgasstroms 150 und eines zweiten Abgasstrom 152 voraus. Der erste Abgasstrom 150 ist typischerweise ein aus einer Turbine eines Abgasturboladers 102 stammende Abgasstrom. Der zweite Abgasstrom 152 kann ein bereits verzögerter Abgasstrom sein. In einem Beispiel kann es sich bei dem zweiten Abgasstrom um einen Abgasstrom aus einem weiteren Turbolader handeln, der einen Diffusor durchströmt hat und dabei verzögert wurde.

Die Verwendung umfasst das Einleiten des ersten Abgasstroms 150 in einer Einströmrichtung 151 in den Diffusor-Gehäuseab schnitt 110 des Gasaustrittsgehäuses 100, 400. Der Diffusor-Gehäuseabschnitt 110 kann ein Diffusor-Gehäuseabschnitt gemäß einer der hierin beschriebenen Ausführungsformen sein. Insbesondere kann der Diffusor-Gehäuseabschnitt ein axialer Diffusor sein. Insbesondere kann der Diffusor-Gehäuseabschnitt einen sich in Umfangrichtung des Diffusor-Gehäuseabschnitts erstreckenden, zumindest teilweise spiralartigen Sammelabschnitt aufweisen. Im Diffusor-Gehäuseabschnitt 110 wird der erste Abgasstrom 150 entlang der Strömungsrichtung 151 des ersten Abgasstroms verzögert. Die Verwendung kann vorsehen, dass der Diffusor-Gehäuseabschnitt den ersten Abgasstrom zusätzlich zumindest teilweise umlenkt oder umleitet, beispielsweise in Richtung des zweiten Abgasstroms.

Die Verwendung umfasst weiterhin das Einleiten des zweiten Abgasstroms 152 in eine der Öffnungen 130, 132 des Vereinigungs-Gehäuseabschnitts 120 des Gasaustrittsgehäuses 100, 400. Der zweite Abgasstrom kann in Folge des Einleitens vorerst in einem ersten Strömungsraum 422 strömen und in weiterer Folge in einen zweiten Strömungsraum 424 einströmen.

Die Verwendung umfasst weiterhin das Einleiten des durch den Diffusor-Gehäuseabschnitt verzögerten ersten Abgasstroms 150 in den Vereinigungs-Gehäuseabschnitt 120. Dazu kann der verzögerte erste Abgasstrom über eine Einleite-Öffnung 434 in den Vereinigungs-Gehäuseabschnitt 120 eingeleitet werden. Der Vereinigungs-Gehäuseabschnitt 120 folgt unmittelbar auf den Diffusor-Gehäuseabschnitt 110. Insbesondere kann der Vereinigungs-Gehäuseabschnitt 120 ohne ein sich nicht erweiterndes Zwischenstück auf den Diffusor-Gehäuseabschnitt 110 folgen, und/oder der Diffusor-Gehäuseabschnitt 110 kann in den Vereinigungs-Gehäuseabschnitt 120 hineinragen. Dabei kann der Diffusor-Gehäuseabschnitt 110 optional über einen Kompensator an den Vereinigungs-Gehäuseabschnitt 120 gekoppelt sein. Durch das Einleiten des verzögerten ersten Abgasstroms 150 in den Vereinigungs-Gehäuseabschnitt wird der verzögerte erste Abgasstrom 150 mit dem zweiten Abgasstrom 152 vereinigt. Die Vereinigung führt typischerweise dazu, dass der verzögerte erste Abgasstrom 150, sofern er nicht in die zweite Richtung strömt, in Richtung der zweiten Richtung 153 umgelenkt wird, sodass in weiterer Folge der vereinigte zweite Abgasstrom 152 entlang der zweiten Richtung 153 strömt. Die Verwendung kann das Ausleiten des vereinigten zweiten Abgasstroms 152 aus dem Gasaustrittsgehäuse umfassen. Der vereinigte zweite Abgasstrom 152 kann über eine der Öffnungen 130, 132 ausgeleitet werden, beispielsweise in ein auf das Gasaustrittsgehäuse folgende Abgassystem.

Gemäß einem Aspekt umfasst die Erfindung eine Methode zur Vereinigung der aus den Turbinen von zwei oder mehr Abgasturboladern austretenden Abgasströme, für jeden der zwei oder mehr Abgasströme umfassend: Einleiten des Abgasstroms in einer Einströmrichtung in einen Diffusor-Gehäuseabschnitt eines Gasaustrittsgehäuses, wobei für jeden Abgasstrom ein Gasaustrittsgehäuse vorgesehen ist, sodass die Anzahl an Gasaustrittsgehäuse der Anzahl an Abgasströmen entspricht, und wobei der Diffusor-Gehäuseabschnitt des Gasaustrittsgehäuses den Abgasstrom entlang einer Strömungsrichtung verzögert; Einleiten des durch den Diffusor-Gehäuseabschnitt verzögerten Abgasstroms in ein Verteiler-Teilgehäuse des Gasaustrittsgehäuses, wobei das Verteiler-Teilgehäuse oder das Diffusor-Teilgehäuse des Gasaustrittsgehäuses den Abgasstrom entlang einer quer zur Einströmrichtung verlaufenden Richtung umlenkt, und wobei der Vereinigungs-Gehäuseabschnitt unmittelbar auf den Diffusor-Gehäuseabschnitt folgt; die Methode ferner umfassend: Vereinigen der umgelenkten Abgasströme in einem gemeinsamen Strömungsraum, wobei der gemeinsame Strömungsraum zumindest abschnittsweise von den Verteiler-Teilgehäusen der Gasaustrittsgehäuse ausgebildet wird.

Gemäß einem Aspekt umfasst die Erfindung eine Anordnung zum Ableiten von aus einer jeweiligen Turbine von zwei oder mehr Abgasturboladern austretenden Abgasströmen, die Anordnung umfassend: zwei oder mehr Gasaustrittsgehäuse gemäß einer hierin beschriebenen Ausführungsform, wobei an jedem Abgasturbolader jeweils ein Gasaustrittsgehäuse der zwei oder mehr Gasaustrittsgehäuse vorgesehen ist, sodass der aus der Turbine des jeweiligen Abgasturboladers stammende Abgasstrom in den Diffusor-Gehäuseabschnitt des Gasaustrittsgehäuses einströmt, und wobei zumindest eine Öffnung eines Vereinigungs-Gehäuseabschnittes eines ersten Gasaustrittsgehäuses mit einer in Ausströmrichtung benachbarten Öffnung eines Vereinigungs-Gehäuseabschnittes eines zweiten Gasaustrittsgehäuses verbunden ist, sodass die verzögerten Abgasströme in einem gemeinsamen Strömungsraum vereint werden, wobei der gemeinsame Strömungsraum den jeweiligen Vereinigungs-Gehäuseabschnitt der zwei oder mehr Gasaustrittsgehäuse umfasst.

Die hierin beschriebenen Ausführungsformen erlauben die Bereitstellung vorteilhafter Abgassysteme für Verbrennungsmotoren mit Turboladern. Insbesondere können derartige Abgassysteme platzsparend umgesetzt werden und im Vergleich zu konventionellen Abgassystemen einen geringeren Strömungswiderstand und damit eine hohe Effizienz aufweisen. Ein Abgassystem mit Gasaustrittsgehäusen gemäß einer hierin beschriebenen Ausführungsform kann mit wenigen Bauteilen realisiert werden, sodass sich hieraus ein Vorteil durch geringere Material-, Bau- und Wartungskosten ergeben kann.

### Bezugszeichenliste

- 100: Gasaustrittsgehäuse
- 102: Abgasturbolader
- 103: Turbine
- 110: Diffusor-Gehäuseabschnitt
- 120: Vereinigungs-Gehäuseabschnitt
- 130: Öffnung
- 132: Öffnung
- 150: Erster Abgasstrom
- 151: Einströmrichtung
- 151a: Einströmrichtung
- 151b: Einströmrichtung
- 152: Zweiter Abgasstrom
- 153: Zweite Richtung
- 153b: Zweite Richtung (umgelenkt)
- 240: Flansch
- 242: Flansch
- 242b: Abgewinkelter Flansch
- 250: Winkel
- 310: Einström-Öffnung (Diffusor-Gehäuseabschnitt)
- 400: Gasaustrittsgehäuse
- 400a: Gasaustrittsgehäuse
- 400b: Gasaustrittsgehäuse
- 422: Erster Strömungsraum (Vereinigungs-Gehäuseabschnitt)
- 424: Zweiter Strömungsraum (Vereinigungs-Gehäuseabschnitt)
- 426: Übergangsbereich (ersten Strömungsraum in zweiten Strömungsraum)
- 434: Einleite-Öffnung (Diffusor-Gehäuseabschnitt in Vereinigungs-Gehäuseabschnitt)
- 510: Spiralartiger Sammelabschnitt
- 700: Anordnung von Gasaustrittsgehäusen
- 710: Erster Kompensator
- 712: Zweiter Kompensator
- 753a: Zweite Richtung
- 753b: Zweite Richtung
- 810: Ableitung
- 812: Ableitung
- 910: Diffusor-Gehäuseabschnitt (Axialer Diffusor)
- 950: Strömungsraum (Diffusor-Gehäuseabschnitt)
- 960: Abgrenzung zum Vereinigungs-Gehäuseabschnitt
- 970: Wände

## Patentansprüche

1. Gasaustrittsgehäuse (100, 400) für einen Abgasturbolader (102), das Gasaustrittsgehäuse umfassend:
einen Diffusor-Gehäuseabschnitt (110) zur Anordnung unmittelbar stromabwärts einer Turbine (103) des Abgasturboladers (102) zur Verzögerung eines aus der Turbine (103) des Abgasturboladers (102) in einer Einströmrichtung (151) unmittelbar in den Diffusor-Gehäuseabschnitt (110) einströmenden ersten Abgasstroms (150), wobei der Diffusor-Gehäuseabschnitt (110) sich in Strömungsrichtung aufweitet, und wobei
der Diffusor-Gehäuseabschnitt (110) zumindest teilweise in den Vereinigungs-Gehäuseabschnitt (120) hineinragt; und
einen stromabwärts unmittelbar auf den Diffusor-Gehäuseabschnitt (110) folgenden Vereinigungs-Gehäuseabschnitt (120) zum Empfangen des verzögerten ersten Abgasstroms (150) aus dem Diffusor-Gehäuseabschnitt (110) und zum Vereinigen des verzögerten ersten Abgasstroms mit einem zweiten Abgasstrom (152), wobei
der Vereinigungs-Gehäuseabschnitt (120) sich in einer im Wesentlichen quer zur Einströmrichtung (151) verlaufenden zweiten Richtung (153) erstreckt und zwei in der zweiten Richtung (153) gegenüberliegende Öffnungen (130, 132) umfasst, wobei
eine erste (130) der zwei gegenüberliegenden Öffnungen (130, 132) zum Aufnehmen des zweiten Abgasstroms (152) eingerichtet ist, und wobei
eine zweite (132) der zwei gegenüberliegenden Öffnungen (130, 132) zum Ausleiten des mit dem verzögerten ersten Abgasstrom vereinigten zweiten Abgasstroms (152) eingerichtet ist.

2. Das Gasaustrittsgehäuse (100, 400) nach Anspruch 1, wobei die Strömungsrichtung des ersten Abgasstroms (150) von der Einströmrichtung (151) hin zur zweiten Richtung (153) im Diffusor-Gehäuseabschnitt (150) und/oder im Vereinigungs-Gehäuseabschnitt (120) umgelenkt wird.

3. Das Gasaustrittsgehäuse (100, 400) nach einem der Ansprüche 1 oder 2, wobei der Diffusor-Gehäuseabschnitt (110) sich in Strömungsrichtung des ersten Abgasstroms (150) kontinuierlich aufweitet.

4. Das Gasaustrittsgehäuse (100, 400) nach einem der vorhergehenden Ansprüche, wobei zumindest eine der Öffnungen (130, 132) des Vereinigungs-Gehäuseabschnitts (120) einen Flansch (240, 242) beinhaltet.

5. Das Gasaustrittsgehäuse (100, 400) nach dem vorhergehenden Anspruch, wobei der Flansch (240, 242) abgewinkelt ist, sodass die Flächennormale des zumindest einen Flansches (240, 242) in Bezug auf die Einströmrichtung in einem nicht-rechtwinkligen Winkel (250) abgewinkelt ist.

6. Das Gasaustrittsgehäuse (100, 400) nach einem der vorhergehenden Ansprüche, wobei das Gasaustrittsgehäuse einen ersten Kompensator (710) zum fluidischen Verbinden des Abgasturboladers (102) mit dem Gasaustrittsgehäuse umfasst.

7. Das Gasaustrittsgehäuse (100, 400) nach einem der vorhergehenden Ansprüche, wobei das Gasaustrittsgehäuse zumindest einen zweiten Kompensator (712) zum fluidischen Verbinden einer der Öffnungen (130, 132) mit einer Öffnung eines weiteren Gasaustrittsgehäuses umfasst.

8. Das Gasaustrittsgehäuse (100, 400) nach einem der vorhergehenden Ansprüche, wobei sich der Querschnitt des Vereinigungs-Gehäuseabschnitts (120) entlang der zweiten Richtung (153) aufweitet.

9. Das Gasaustrittsgehäuse (100, 400) nach einem der vorhergehenden Ansprüche, wobei der Diffusor-Gehäuseabschnitt (110) einen sich in Umfangsrichtung des Diffusor-Gehäuseabschnitts (110) erstreckenden, zumindest teilweise spiralartigen Sammelabschnitt (510) aufweist.

10. Ein erstes Gasaustrittsgehäuse und ein zweites Gasaustrittsgehäuse, wobei
das zweite Gasaustrittsgehäuse ein Gasaustrittsgehäuse (100, 400) nach einem der vorhergehenden Ansprüche 1 bis 9 ist, und wobei
aus einer Öffnung des ersten Gasaustrittsgehäuses ein Abgasstrom ausgeleitet wird, und wobei
die Öffnung des ersten Gasaustrittsgehäuses fluidisch mit der Öffnung (130) zum Aufnehmen des zweiten Abgasstroms (152) des zweiten Gasaustrittsgehäuses verbunden ist, sodass der aus dem ersten Gasaustrittsgehäuse ausgeleitete Abgasstrom als zweiter Abgasstrom (152) in das zweite Gasaustrittsgehäuse (100, 400) eingeleitet wird, und wobei
das zweite Gasaustrittsgehäuse (100, 400) dazu eingerichtet ist, den aus dem ersten Gasaustrittsgehäuse stammenden zweiten Abgasstrom (152) mit einem in das zweite Gasaustrittsgehäuse einströmenden ersten Abgasstrom (150) zu vereinigen.

11. Das erste Gasaustrittsgehäuse und das zweite Gasaustrittsgehäuse (100, 400) nach dem vorhergehenden Anspruch, wobei
das erste Gasaustrittsgehäuse ein Gasaustrittsgehäuse (100, 400) nach einem der vorhergehenden Ansprüche ist 1 bis 10, und wobei
der aus dem ersten Gasaustrittsgehäuse (100, 400) ausgeleitete Abgasstrom ein zweiter Abgasstrom (152) ist, und wobei
die Öffnung des ersten Gasaustrittsgehäuses (100, 400) eine Öffnung (132) zum Ausleiten des zweiten Abgasstroms (152) ist.

12. Abgasturbolader (102) für einen Verbrennungsmotor, der Abgasturbolader (102) umfassend ein Gasaustrittsgehäuse (100, 400) gemäß eines der Ansprüche 1 bis 9, wobei
der Abgasturbolader (102) mit dem Gasaustrittsgehäuse (100, 400) zum Einleiten des ersten Abgasstroms (150) in den Diffusor-Gehäuseabschnitt (110) des Gasaustrittsgehäuses (100, 400) fluidisch verbunden ist, und wobei
der erste Abgasstrom (150) ein aus der Turbine (103) des Abgasturboladers (102) stammender Abgasstrom ist.

13. Der Abgasturbolader (102) nach dem vorhergehenden Anspruch, wobei das Gasaustrittsgehäuse dazu eingerichtet ist, über zumindest eine der Öffnungen (130, 132) mit zumindest einer weiteren Öffnung eines weiteren Gasaustrittsgehäuses fluidisch verbunden zu werden.

14. Der Abgasturbolader (102) nach einem der vorhergehenden Ansprüche, wobei der Abgasturbolader (102) ein Axial-Abgasturbolader ist.

15. Verwendung eines Gasaustrittsgehäuses (100, 400) nach einem der Ansprüche 1 bis 11 in einem Abgassystem eines oder mehrerer Verbrennungsmotoren mit Abgasturboladern (102), die Verwendung umfassend:
- Einleiten eines aus der Turbine (103) des Abgasturboladers (102) austretenden ersten Abgasstroms (150) in einer Einströmrichtung (151) in den Diffusor-Gehäuseabschnitt (110) des Gasaustrittsgehäuses (100, 400), wobei der Diffusor-Gehäuseabschnitt (110) des Gasaustrittsgehäuses (100, 400) den ersten Abgasstrom (150) entlang der Strömungsrichtung verzögert,
- Einleiten eines zweiten Abgasstroms (152) in eine der Öffnungen (130, 132) des Vereinigungs-Gehäuseabschnitts (120) des Gasaustrittsgehäuses (100, 400),
- Einleiten des durch den Diffusor-Gehäuseabschnitt (110) verzögerten ersten Abgasstroms (150) in den Vereinigungs-Gehäuseabschnitt (120) des Gasaustrittsgehäuses (100, 400), wobei der Vereinigungs-Gehäuseabschnitt (120) und/oder der Diffusor-Gehäuseabschnitt (110) des Gasaustrittsgehäuses (100, 400) den ersten Abgasstrom (150) entlang der zweiten Richtung (153) umlenkt, und wobei der Vereinigungs-Gehäuseabschnitt (120) unmittelbar auf den Diffusor-Gehäuseabschnitt (110) folgt.
